# FASCICULE DE BREVET EUROPEEN

(11) **EP 1 932 161 B1**
(45) Date de publication et mention de la délivrance du brevet: **04.07.2012**
(21) Numéro de dépôt: 06793816.7
(22) Date de dépôt: 25.09.2006
(51) Int. Cl.: G21F 7/005, G21F 7/047, F16J 15/06

(54) **MOYEN D'ETANCHEITE, DISPOSITIF DE TRANSFERT COMPORTANT UN TEL MOYEN D'ETANCHEITE, INSTALLATION COMPORTANT UN TEL DISPOSITIF ET PROCEDE DE FABRICATION DUDIT MOYEN D'ETANCHEITE**
ABDICHTMITTEL, MIT DEM ABDICHTMITTEL AUSGESTATTETE TRANSFEREINRICHTUNG, ANORDNUNG MIT DER TRANSFEREINRICHTUNG UND VERFAHREN ZUR HERSTELLUNG DES ABDICHTMITTELS
SEALING MEANS, TRANSFER DEVICE PROVIDED WITH SAID SEALING MEANS, ARRANGEMENT COMPRISING SAID TRANSFER DEVICE AND A METHOD FOR PRODUCING SAID SEALING MEANS

(30) Priorité: 28.09.2005 FR 0552938
(43) Date de publication de la demande: 18.06.2008
(73) Titulaire: Areva NC, 75009 Paris (FR)
(72) Inventeur: BOUZON, Pierre, F-30200 Chusclan (FR)
(74) Mandataire: Poulin, Gérard
(86) Numéro de dépôt international: PCT/EP2006/066710
(87) Numéro de publication internationale: WO 2007/036507

(56) Documents cités:
- EP-A- 0 837 277
- FR-A- 1 364 102
- US-A- 4 077 389
- US-A- 4 221 039
- US-A- 5 984 318

## Description

### DOMAINE TECHNIQUE ET ART ANTÉRIEUR

La présente invention se rapporte principalement à un moyen d'étanchéité, notamment entre deux milieux radioactifs, à un dispositif de transfert dans une unité de fabrication de combustible nucléaire comportant des moyens d'isolation étanche, à une installation de fabrication comportant un tel dispositif et un procédé de fabrication d'un tel moyen d'étanchéité.

Il est connu, par exemple du document FR 1 364 102, une porte tambour ou barillet pour transférer un objet radioactif d'un espace confiné à un autre, la porte assurant à la fois en fonctionnement et au repos l'isolation étanche entre les deux espaces. L'étanchéité est obtenue grâce à un joint gonflable monté sur une paroi entourant en partie le tambour.

Les moyens d'étanchéité doivent être résistants au gaz chaud et aux flammes en cas d'incendie, afin de limiter la propagation de flammes et de gaz contaminés.

Or les joints actuellement utilisés qui sont fixés sur la porte, ou sur la paroi séparant les deux espaces confinés, ne garantissent pas à la fois une résistance suffisante aux gaz chauds et aux flammes et une isolation étanche à la contamination pendant une longue période. De plus ces joints sont fragiles et deviennent rapidement cassants puisqu'ils sont sollicités à chaque rotation de la porte barillet.

Il apparaît alors des problèmes importants de maintenance de ce type de dispositif de transfert, qui peuvent provoquer des arrêts de longue durée des installations.

C'est par conséquent un but de la présente invention d'offrir des moyens d'étanchéité offrant les garanties de sécurité nécessaires pour ce type de dispositif.

C'est également un but de la présente invention d'offrir un dispositif de transfert pouvant fonctionner dans des conditions sûres pour l'environnement et pour les personnes travaillant dans ce type d'installation.

### EXPOSÉ DE L'INVENTION

Les buts précédemment énoncés sont atteints par un moyen permettant d'isoler de manière étanche deux chambres, formé par un joint et un porte-joint, le joint étant apte à isoler des flammes et des gaz chauds et suffisamment résistant aux radiations pour convenir à de tels dispositifs. Le porte-joint est facilement démontable, permettant ainsi un remplacement aisé du joint, lorsque celui-ci montre des signes de détérioration.

On entend par étanchéité, la propriété de confiner pour un temps déterminé des flammes et des gaz chauds dans une première chambre afin d'éviter leur passage dans une deuxième chambre.

Ainsi, il n'est pas nécessaire d'avoir un joint qui soit à la fois résistant aux flammes, aux gaz chauds et à l'irradiation sur une longue période, puisque celui-ci peut être changé simplement et rapidement. Ce remplacement n'impose pas un arrêt prolongé du dispositif.

La présente invention a alors principalement pour objet un moyen d'étanchéité pour dispositif de transfert d'une installation nucléaire comportant un porte-joint et un joint solidaire de ce porte-joint, ledit porte-joint pouvant être fixé de manière amovible entre deux zones devant être isolées l'une de l'autre.

Le porte-joint comporte par exemple une rainure en T recevant le joint. De manière avantageuse, le porte-joint est en acier inoxydable.

Le joint est en matériau résistant aux flammes, aux gaz chauds et à l'irradiation, avantageusement en matériau intumescent.

Dans un exemple de réalisation, le porte-joint est réalisé en plusieurs parties, par exemple en trois parties.

La présente invention a également pour objet un dispositif de transfert d'un installation nucléaire entre deux chambres séparées par une paroi, le dispositif de transfert comportant un mécanisme de transfert et au moins un moyen d'étanchéité selon la présente invention, ledit moyen d'étanchéité étant disposé entre la paroi et le mécanisme de transfert.

En outre, le porte-joint et le joint sont disposés sensiblement le long de la paroi selon une génératrice d'un cylindre formant la périphérie extérieure du mécanisme de transfert.

Dans un exemple de réalisation, le mécanisme de transfert est du type porte à barillet mobile autour d'un axe, comportant un corps cylindrique délimitant un espace intérieur dans lequel peut être disposé un objet, cet espace étant accessible par une ouverture qui peut être orientée soit du côté d'une première chambre soit du côté d'une deuxième chambre.

De manière avantageuse, le dispositif de transfert selon l'invention comporte un premier moyen de perte de charge apte à augmenter la course des gaz entre les chambres, ledit premier moyen étant monté sur une extrémité supérieure de la porte sensiblement selon un plan orthogonal à l'axe de rotation de la porte.

Le premier moyen de perte de charge.est, par exemple, formé par une cornière en acier et, de manière avantageuse, par plusieurs arcs de cercle mis bout à bout.

Le dispositif de transfert peut également comporter un deuxième moyen de perte de charge disposé le long d'une génératrice de la périphérie extérieure du mécanisme de transfert. Ce deuxième moyen comporte par exemple un élément allongé en acier, à section transversale sensiblement circulaire.

Dans un exemple de réalisation, la porte comporte un premier axe en saillie d'une face supérieure et un deuxième axe en saillie d'une face inférieure autour desquels la porte est apte à tourner sur elle-même. La porte peut être entraînée en rotation par un moteur électrique.

La présente invention a également pour objet une installation de fabrication ou de traitement, par exemple de combustible nucléaire, par exemple du type MOX (mélange d'oxyde d'uranium et d'oxyde de plutonium) comportant une chambre principale et au moins une chambre secondaire séparées par la paroi, une ouverture de communication entre les chambres pratiquée dans la paroi, un dispositif de transfert selon l'invention, isolant les chambres.

Le porte-joint est fixé par boulonnage sur la paroi séparant les deux chambres.

L'installation de fabrication selon la présente invention peut comporter un premier renfoncement incurvé de rayon intérieur sensiblement égal au rayon extérieur de la porte et recevant une portion de cette porte.

Le deuxième moyen de perte de charge est par exemple soudé dans une gorge délimitée par la paroi et un caisson de protection délimitant le premier renfoncement, un deuxième renfoncement incurvé entourant la porte, sur environ 180°.

### BRÈVE DESCRIPTION DES FIGURES

La présente invention sera mieux comprise à l'aide de la description qui va suivre et des figures annexées sur lesquelles :
- la figure 1 est une vue en coupe transversales d'un dispositif de transfert selon la présente invention,
- la figure 2 est une vue en coupe longitudinale selon le plan A-A du dispositif de transfert selon la figure 1 dans lequel la porte a été enlevée,
- la figure 3 est une vue d'un détail agrandi de la figure 1,
- la figure 4 est une vue en coupe d'un porte-joint et d'un joint selon la présente invention,
- la figure 5 est une vue d'un autre de détail agrandi de la figure 1,
- la figure 6A est une vue en coupe d'une partie supérieure du dispositif de transfert de la figure 1,
- la figure 6B est une vue de détail en coupe de la figure 6A,
- la figure 7 est une vue en perspective d'un dispositif de fabrication d'un ensemble joint/porte-joint selon la présente invention,
- la figure 8 est une vue en coupe transversale de la figure 7,
- la figure 9 est une vue schématique de dessus d'un atelier de fabrication de combustible nucléaire mettant en oeuvre les dispositifs de transfert selon la présente invention,
- la figure 10 est une vue en coupe longitudinale schématique d'un dispositif selon la présente invention.

### EXPOSÉ DÉTAILLÉ DE MODES DE RÉALISATION PARTICULIERS

Dans la description qui va suivre, l'invention est appliquée à une installation de fabrication de combustible nucléaire, mais elle s'applique également à une installation d'utilisation d'un tel combustible ou de traitement de celui-ci.

En outre, le dispositif de transfert selon l'invention peut être utilisé dans toute installation nécessitant un transfert entre deux zones entre lesquelles une isolation étanche est attendue.

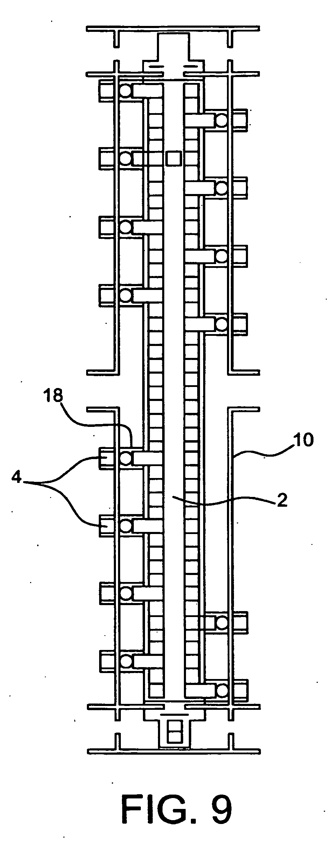

Sur la figure 9, on peut voir représenté de manière schématique un atelier dans lequel est fabriqué un combustible nucléaire. Cet atelier comporte une chambre principale 2 munie par exemple d'un moyen de transport ou de convoyage des matériaux destinés à la fabrication du combustible nucléaire, et des chambres secondaires 4 dans desquelles s'effectuent les différentes opérations de transformation des matériaux de base du combustible nucléaire. Les opérations de base sont par exemple le dosage du mélange primaire, le broyage, le dosage du mélange final, l'homogénéisation, la granulation et la réalisation de pastilles de combustible nucléaire qui seront ensuite mises en place dans des gaines pour former des crayons.

La chambre principale 2 a la forme d'un couloir rectangulaire et les chambres secondaires 4 sont réparties de part et d'autre de la chambre principale 2. Des ouvertures 18 permettent une communication entre la chambre 2 et les chambres 4.

Afin d'assurer une protection maximale d'utilisation et de fonctionnement, la chambre principale 2 et les chambres secondaires 4 sont isolées les unes des autres pour réduire les risques de propagation des flammes et des gaz chauds en cas d'incendie dans l'une des chambres. Pour permettre, cependant, de transférer les matériaux entre les chambres secondaires par l'intermédiaire de la chambre principale 2, des dispositifs de transfert 6 sont interposés entre la chambre principale 2 et les chambres secondaires 4, au niveau des ouvertures 18.

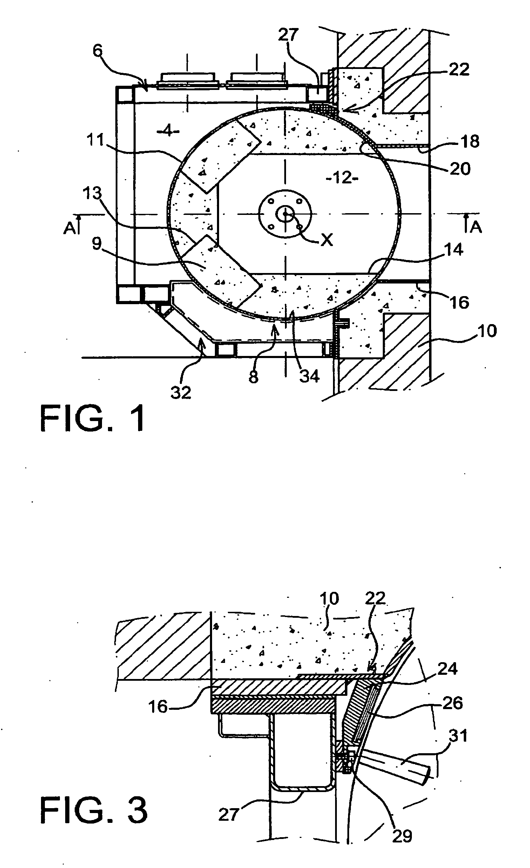

Sur la figure 1, on peut voir ce dispositif de transfert, comportant une porte dite à barillet 8 montée en rotation autour d'un axe X et permettant de transférer des objets de la chambre principale 2 vers des chambres secondaires 4 et vice versa. La chambre principale 2 est séparée des chambres secondaires 4 par une paroi d'isolation 10.

Tous les dispositifs de transfert de l'installation étant sensiblement les mêmes, nous décrirons uniquement un dispositif de transfert 6 et une chambre secondaire 4.

La porte barillet 8 a sensiblement la forme d'un cylindre régulier, délimitant un espace intérieur 12, communiquant avec l'extérieur par une ouverture, dans l'exemple représenté, sensiblement rectangulaire 14.

La porte barillet 8 comporte un corps 9 formé, par exemple, d'une enveloppe 11 en acier inoxydable rempli d'un matériau comportant de la fonte et des liants type résine, tel que du MP2.

L'enveloppe comporte, de manière avantageuse des bras pénétrant dans le matériau de remplissage de manière à assurer une bonne fixation de l'enveloppe 11 dans le matériau.

La paroi 10 est réalisée, par exemple, en béton et recouverte d'un blindage 16 de manière à être étanche aux incendies. L'ouverture 18 est sensiblement de même dimension que celle de l'ouverture 14 pratiquée dans la porte barillet 8, de manière à ce que lorsque l'ouverture 14 de la porte barillet se trouve en regard de l'ouverture 18 de la paroi, les ouvertures 14 et 18 correspondent.

La paroi 10 comporte un renfoncement 20 délimité par une surface incurvée, de rayon intérieur sensiblement égal au rayon extérieur du barillet 8, et recevant une partie dudit barillet 8. Le barillet pénètre dans la paroi 10 et des moyens 22 d'étanchéité sont prévus entre la périphérie cylindrique de la porte et la surface incurvée de la paroi 10, de manière à assurer une étanchéité entre le barillet et la paroi, et donc entre la chambre principale 2 et la chambre secondaire 4.

Un moyen d'étanchéité 22 selon la présente invention, est disposé, le long d'une génératrice (figure 1) du corps cylindrique 9 de manière à être en contact avec la périphérie extérieure du barillet 8. Le moyen 22 est, par exemple fixé à la paroi 10, en particulier à une extrémité du renfoncement incurvé 20.

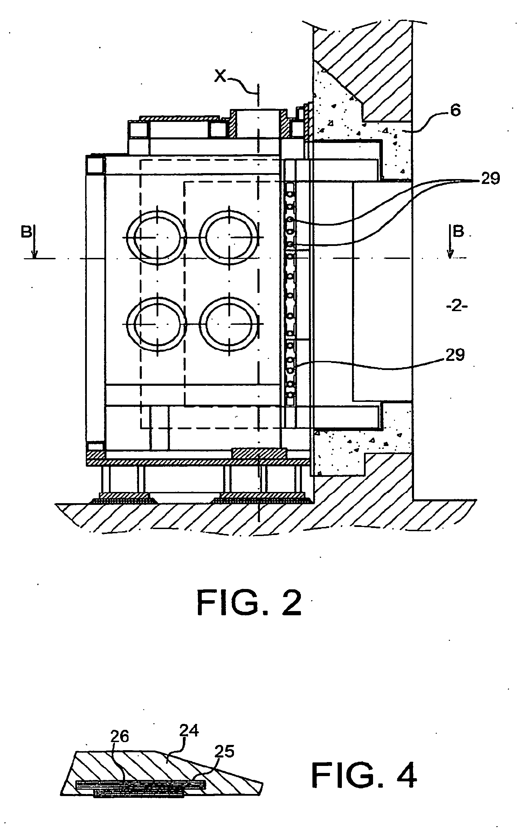

Ce moyen d'étanchéité 22 comporte, selon la présente invention et comme illustré sur les figures 3 et 4, un porte-joint 24 et un joint 26, le porte-joint 24 étant fixé sur la paroi 10, et le joint étant en contact avec la périphérie extérieure du barillet 8.

Le porte-joint 24 a une forme sensiblement trapézoïdale, la grande base comportant une rainure 25 dans laquelle est placé le joint 26. La forme particulière du porte-joint assure un guidage pour le montage du porte-joint, facilitant sa mise en place précise et l'alignement du joint avec la paroi cylindrique extérieure du barillet.

La rainure 25 a avantageusement une section en T pour améliorer le maintien du joint 26.

De manière avantageuse, le porte-joint est muni d'une poignée 31 de préhension pour la mise en place et le montage du porte-joint sur la paroi 10 et l'élément 27. Cette poignée 31 peut être amovible, elle sert au montage du porte-joint, pour cela elle est fixée sur le porte-joint, après le montage du porte-joint sur le barillet, 8, elle est retirée pour le fonctionnement du barillet. Pour le démontage du porte-joint, la poignée 31 est à nouveau fixée sur celui-ci.

De manière avantageuse, le porte-joint 24 est réalisé en acier inoxydable par moulage, puis la rainure 25 dans laquelle est injecté le matériau du joint, est usinée.

Le joint est avantageusement réalisé en un matériau intumescent, qui a la propriété de gonfler sous l'effet de la chaleur assurant ainsi un contact étanche aux gaz chauds et inflammables. De manière avantageuse, il assure également une isolation thermique. Par exemple le matériau du joint peut être choisi pour assurer sa fonction d'étanchéité pendant plus de 2 heures.

Le joint est par exemple réalisé en mastic bi-composant, tel qu'un 335s de la marque Mécatiss®. La rainure peut avoir toute autre forme assurant la retenue du joint dans la rainure, par exemple une forme de trapèze, la grande base correspondant au fond de la rainure 25.

Le porte-joint 24 est fixé à la paroi 10 de manière amovible, par exemple par boulonnage. Des boulons 29 sont par exemple soudés sur le blindage 16 (figure 2) sur lesquels le porte-joint peut être fixé au moyen d'écrous. Tout autre moyen de fixation amovible peut être employé pour solidariser le porte-joint 24 à la paroi 10.

Dans l'exemple représenté, le porte-joint 24 est réalisé en plusieurs morceaux qui sont mis bout à bout afin de réaliser l'étanchéité entre la paroi 10 et le barillet 8 sur toute la hauteur du barillet 8.

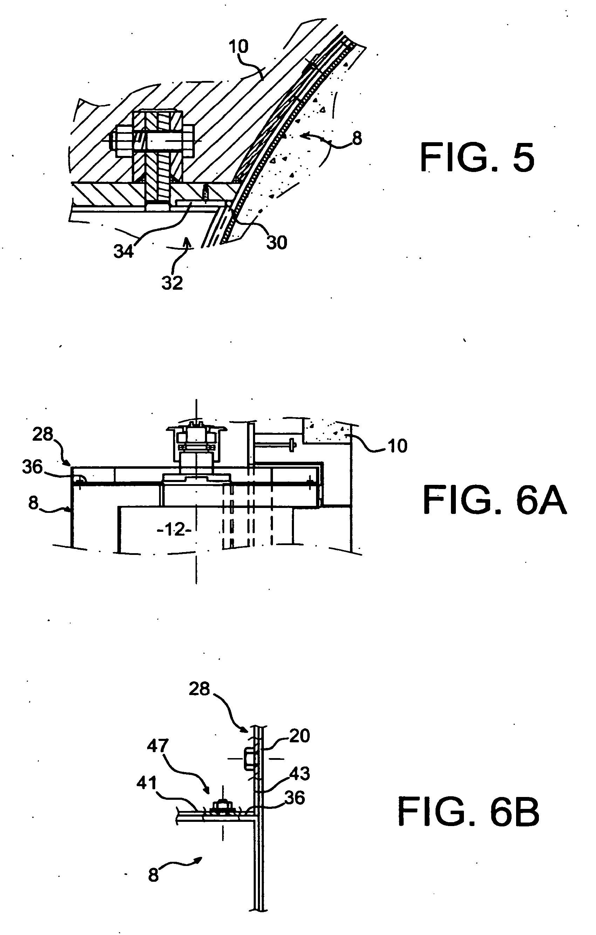

Le dispositif de transfert 6 selon la présente invention comporte également, de manière avantageuse, un premier moyen 28 représenté sur les figures 6A et 6B, apte à provoquer une perte de charge pour des gaz chauds. Ce premier moyen 28 est disposé à une extrémité supérieure du barillet 8.

Ce moyen 28 est réalisé sous la forme d'une cornière ou couronne annulaire. La couronne 28 vue en coupe sur la figure 6B, comporte un premier 41 et un deuxième 43 côtés sensiblement à angle droit, le premier côté 41 étant en appui sur une surface supérieure 36 du tambour 8 et le deuxième côté 43 étant en alignement de la périphérie extérieure du tambour 8, prolongeant ainsi vers le haut le tambour 8.

La cornière 28 est par exemple en acier, comportant plusieurs arcs de cercle, par exemple six, mis bout à bout par soudage. Les arcs de cercle ont un rayon intérieur sensiblement égal à celui du barillet. Ces secteurs sont avantageusement non jointifs.

La cornière 28 est, par exemple, fixée par son premier côté 41 sur le barillet 8 par un ensemble 47 goujon, rondelle et écrou soudé.

De manière avantageuse, des moyens (non représentés) pour régler la position de la cornière peuvent être prévus sur la cornière 28. Ceux-ci permettent de fixer un jeu déterminé entre le renfoncement 20 et le deuxième côté 43 de la cornière 28. Ces moyens de réglage sont avantageusement amovibles et ne sont montés sur la cornière 28 que pour son positionnement.

La cornière 28 forme un système de chicanes, qui permet d'améliorer considérablement l'étanchéité en créant une perte de charge pour les gaz chauds. En outre, l'ajout de cette cornière 28 sur le barillet 8 augmente la hauteur totale du barillet, allongeant la course des gaz chauds pour déboucher sur la face supérieure du barillet 8.

Le dispositif selon la présente invention comporte également, de préférence, un deuxième moyen 30 de perte de charge, disposé sensiblement le long d'une génératrice du corps cylindrique 9, entre la paroi 10 et un caisson de protection 32.

Le caisson de protection 32 comporte un renfoncement 34 de forme sensiblement incurvée, de rayon intérieur sensiblement égal au rayon extérieur du barillet 8 et délimitant avec le renfoncement 20 de la paroi 10, un logement s'étendant sensiblement à 180° autour du barillet 8.

Le caisson 32 évite une mise en communication des chambres 2 et 4 lors de la rotation de la porte 8 en assurant un recouvrement minimum entre l'ouverture 14 de la porte 8 et le caisson 32. Ainsi il évite la propagation du feu pendant la rotation de la porte. Le caisson 32 est par exemple formé d'une enveloppe en acier inoxydable rempli de MP2 cité précédemment.

Le deuxième moyen 30 de perte de charge, représenté sur la figure 5, est interposé entre le caisson de protection 32 et la paroi 10. Dans l'exemple représenté, le deuxième moyen 30 de perte de charge est formé d'un élément allongé, par exemple en acier à section transversale circulaire, du type rond d'acier, soudé dans une gorge 34 pratiquée entre la paroi 10 et le caisson 32.

De manière avantageuse, le deuxième moyen 30 est réalisé en plusieurs tronçons, par exemple deux, avantageusement soudé dans un logement délimité entre le blindage recouvrant la paroi 10 et le caisson 32, par exemple par soudure discontinue par point.

Dans l'exemple représenté, les extrémités supérieures et inférieures du rond d'acier (non représentées) sont repliées à 90° en direction de la paroi en éloignement du barillet, ce qui permet de supprimer les jeux de la gorge 34 débouchante.

Le rond d'acier est ajusté de manière à garantir un jeu maximum, par exemple de l'ordre de 2 mm, avec la périphérie extérieure de la porte. Ceci permet d'obtenir une perte de charge suffisante pour limiter une propagation des gaz chauds.

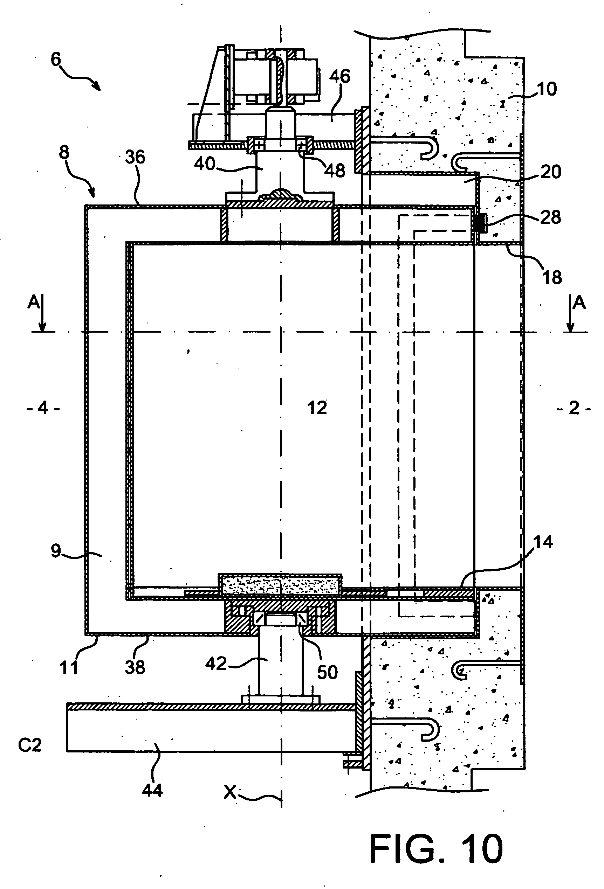

Sur la figure 10, on peut voir une porte 8 pour un dispositif de transfert selon la présente invention, comportant une première surface supérieure 36 et une deuxième surface inférieure 38, et des premier 40 et deuxième 42 axes respectivement en saillie des surfaces 36 et 38, disposés selon la direction X et formant l'axe de rotation de la porte 8.

Dans l'exemple représenté, les bras sont maintenus axialement par rapport à la paroi 10 au moyen d'un support inférieur 44 en saillie transversalement de la paroi dans la chambre secondaire 2 et d'un support supérieur 46 également en saillie transversalement de la paroi 10.

Lé premier axe 40 est fixe en rotation par rapport à la porte et mobile en rotation par rapport au support supérieur 46 au moyen d'un palier 48. Le deuxième axe est quant à lui, dans l'exemple représenté, fixé en rotation sur le support inférieur 44 et mobile au moyen d'un palier 50 par rapport à la porte 8.

La porte est entraînée en relation par un moteur électrique disposé à une extrémité de l'axe 40. Le moteur peut être commande de l'extérieur de l'installation.

Le moteur peut également être disposé sur le deuxième axe 42. On peut également prévoir plusieurs moteurs.

Nous allons maintenant expliquer le fonctionnement d'un tel dispositif de transfert.

Sur la figure 1, on peut voir le tambour, en particulier l'espace intérieur 12 ouvert sur la chambre principale 2. Dans cette position, un objet par exemple une jarre (non représentée) contenant un ou plusieurs matériaux pour fabriquer du combustible nucléaire est introduit dans l'espace 12. La porte barillet 8 est ensuite mise en rotation autour de l'axe X. Après avoir effectué une rotation de 180°, le volume intérieur 12 est ouvert sur la chambre secondaire 4. La jarre contenue dans l'espace 12 peut alors être transférée dans la chambre secondaire 4.

Le dispositif de transfert peut être prévu pour que la rotation dans un sens de la porte barillet soit inférieure à 180°.

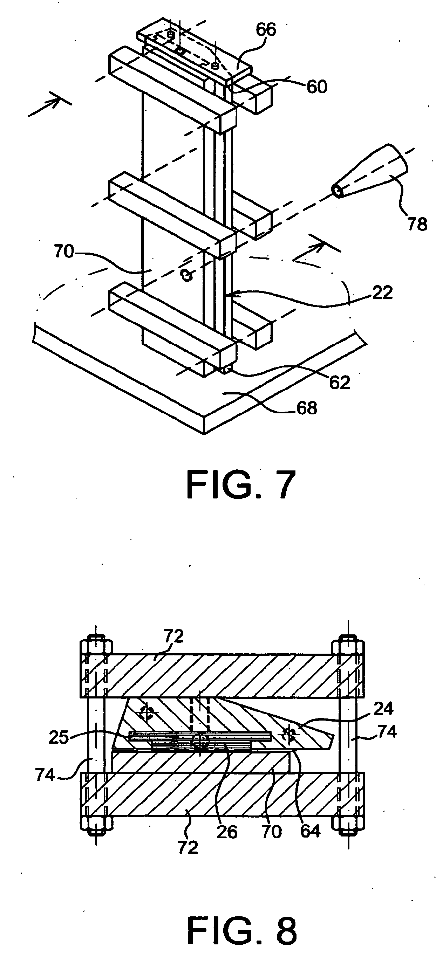

Nous allons maintenant décrire un procédé de réalisation de l'ensemble joint et porte-joint mis en oeuvre dans un dispositif de transfert selon la présente invention, en relation avec les figures 7 et 8.

Un tel procédé comporte les étape suivantes :
- de mise en place d'obturateurs sur les extrémités longitudinales et transversales de la rainure (25) du porte-joint,
- d'injection dans la rainure d'un matériau résistant aux flammes et aux gaz chauds,
- de retrait des obturateurs.

Sur les figures 7 et 8, on peut voir l'étape d'injection du matériau formant le joint dans le porte-joint.

Afin de réaliser l'injection, les extrémités longitudinales 60, 62 de la rainure, ainsi que son extrémité ouverte 64 sont obturées par des plaques 66, 68, 70 respectivement, de manière à délimiter l'emplacement et la forme du joint 26.

Les plaques 66, 68 sont maintenues solidaires du porte-joint, par exemple par visage sur les extrémités longitudinales du porte-joint. La plaque 70 est, dans l'exemple représenté, maintenue par serrage entre des éléments transversaux 72 raccordés par des éléments de serrage 74, tels que des tiges filetées et des écrous.

Un orifice 76 est prévu dans la plaque 70 pour l'injection du matériau du joint par une buse 78 dans la rainure 25.

Lorsque le matériau a la texture désirée, les plaques 66, 68 et 70 sont retirées. Le porte-joint muni du joint est prêt à être monté.

Il peut être prévu à l'extrémité transversale 64 de la rainure 25 une feuille tricotée de Kevlar® et une feuille de Milard® pour assurer l'étanchéité du moule lors de l'injection du matériau. Celles-ci sont retirées lors du démoulage.

## Revendications

1. Dispositif de transfert d'une installation nucléaire entre deux chambres séparées par une paroi (10), étant du type porte à barillet (8) mobile autour d'un axe (X) comportant un corps cylindrique (9) délimitant un espace intérieur (12) dans lequel peut être disposé un objet, cet espace (12) étant accessible par une ouverture (14) qui peut être orientée soit du côté d'une première chambre (2), soit du côté d'une deuxième chambre (4), ledit dispositif comportant au moins un moyen d'étanchéité comportant un porte-joint (24) et un joint (26) solidaire de ce porte-joint (24), ledit porte-joint (24) pouvant être fixé de manière amovible entre la paroi (10) et la porte à barillet (8), le porte-joint (24) et le joint (26) étant disposés sensiblement le long de la paroi (10) selon une génératrice d'un cylindre formant la périphérie extérieure de la porte à barillet (8), le joint (26) étant en contact avec la périphérie extérieure de la porte barillet pour frotter contre celle-ci afin d'assurer l'étanchéité entre la paroi (10) et la périphérie extérieure de la porte à barillet (8).

2. Dispositif selon la revendication le, dans lequel le porte-joint (24) comporte une rainure en T recevant le joint (26).

3. Dispositif selon la revendication 1 ou 2, dans lequel le porte-joint (24) est en acier inoxydable.

4. Dispositif selon l'une quelconque des revendications précédentes, dans lequel le joints est en matériau résistant aux flammes et aux gaz chauds.

5. Dispositif selon la revendication précédente, dans lequel le joint est en un matériau intumescent.

6. Dispositif selon l'une quelconque des revendications précédentes, dans lequel le moyen d'étanchéité est réalisé en plusieurs parties, par exemple en trois parties.

7. Dispositif de transfert selon l'une quelconque des revendications précédentes, comportant un premier moyen (28) de perte de charge apte à augmenter la course des gaz entre les chambres (2, 4), ledit premier moyen (28) étant monté sur une extrémité supérieure de la porte (8), sensiblement dans un plan orthogonal à l'axe de rotation (X) de la porte (8).

8. Dispositif de transfert selon la revendication précédente, dans lequel le premier moyen (28) de perte de charge est formé par une cornière en acier.

9. Dispositif de transfert selon la revendications 7 ou 8, dans lequel le premier moyen (28) de perte de charge est formé par plusieurs arcs de cercle mis bout à bout.

10. Dispositif selon l'une quelconque des revendications précédentes, comportant un deuxième moyen (30) de perte de charge, disposé le long d'une génératrice de la périphérie extérieure du mécanisme de transfert.

11. Dispositif selon la revendication précédente, dans lequel le deuxième moyen (30) de perte de charge comporte un élément allongé en acier, à section transversale sensiblement circulaire.

12. Dispositif selon l'une quelconque des revendications précédentes, dans lequel la porte comporte un premier axe (40) en saillie d'une première face (36) et un deuxième axe (42) en saillie d'une deuxième face (38), autour desquels la porte est apte à tourner sur elle-même.

13. Dispositif selon l'une quelconque des revendications précédentes, dans lequel la porte est entraînée en rotation au moyen d'au moins un moteur électrique.

14. Installation nucléaire, comportant une chambre principale (2) et au moins une chambre secondaire (4) séparées par unie paroi (10), une ouverture (18) de communication entre les chambres (2,4) pratiquée dans la paroi (10), un dispositif de transfert selon l'une des revendications précédentes, entre les chambres (2,4).

15. Installation selon la revendication précédente, dans laquelle le porte-joint (24) est fixé par boulonnage sur la paroi séparant les deux chambres (2, 4).

16. Installation selon la revendication 14 ou 15, comportant un premier renfoncement (20) incurvé de rayon intérieur sensiblement égal au rayon extérieur de la porte (8) et recevant une portion de cette porte (8).

17. Installation selon la revendication précédente en combinaison avec la revendication 10 ou 11, dans lequel le deuxième moyen (30) de perte de charge est soudé dans une gorge délimitée par la paroi (10) et un caisson de protection délimitant avec le renfoncement, un deuxième renfoncement incurvé entourant la porte, sur environ 180°.

18. Installation selon l'une des revendications 14 à 17, ladite installation étant une installation de fabrication de combustible

## Claims

1. Transfer device for a nuclear installation between two chambers separated by a wall (10), being of the barrel door type (8) mobile around an axis (X) comprising a cylindrical body (9) defining an inner space (12) wherein an object can be positioned, this space (12) being accessible by an opening (14) which can be oriented either can the side of the first chamber (2), or on the side of a second chamber (4), said device comprising at least one sealing means comprising a seal carrier (24) and a seal (26) attached to this seal carrier (24), wherein said seal carrier (24) may be removably fixable between the wall (10) and the barrel door (8), the seal carrier (24) and the seal (26) being arranged substantially along the wall (10) according to a generatrix of a cylinder forming the outer periphery of the barrel door (8), with the seal (26) being in contact with the outer periphery of the barrel door in order to rub against the latter in order to provide a seal between the wall (10) and the outer periphery of the barrel door (8).

2. Device set forth in claim 1, wherein the seal carrier (24) comprises a T groove receiving the seal (26).

3. Device set forth in claim 1 or 2, wherein the seal carrier (24) is made of stainless steel.

4. Device as set forth in any of the preceding claims, wherein the seal is made of a flame- and hot gas-resistant material.

5. Device as claimed in the preceding claim, wherein the seal is made of intumescent material.

6. Device as set forth in any of the preceding claims, wherein the sealing means is made of several parts, for example three parts,

7. Transfer device as set forth in any of the preceding claims, comprising a first pressure drop means (28) able to increase the travel of the gases between the chambers (2, 4), said first means (28) being mounted on an upper end of the door (8), substantially in a plane orthogonal to the axis of rotation (X) of the door (8).

8. Transfer device as claimed in the preceding claim, wherein the first pressure drop means (28) is formed by a steel angle assembly.

9. Transfer device set forth in claim 7 or 8, wherein the first pressure drop means (28) is formed by several arcs of a circle placed end to end.

10. Device as set forth in any of the preceding claims, comprising a second pressure drop means (30), positioned along a generatrix of the outer periphery of the transfer mechanism.

11. Device as claimed in the preceding claim, wherein the second pressure drop means (30) comprises an elongated element made of steel, with a substantially circular transversal section.

12. Device as set forth in any of the preceding claims, wherein the door comprises a first axis (40) projecting from a first side (36) and a second axis (42) projecting from a second side (38), around which the door is able to rotate.

13. Device as set forth in any of the preceding claims, wherein the door is driven in rotation using at least one electric motor.

14. Nuclear installation, comprising a main chamber (2) and at least one secondary chamber (4) separated by a wall (10), an opening (18) for communication between the chambers (2, 4) arranged in the wall (10), a transfer device according to one of the preceding claims, between the chambers (2, 4).

15. Installation as claimed in the preceding claim, wherein the seal carrier (24) is fixed by screw-bolt connection on the wall separating the two chambers (2, 4).

16. Installation set forth in claim 14 or 15, comprising a first curved recess (20) of inner radius substantially equals to the outer radius of the door (8) and receiving a portion of this door (8).

17. Installation as claimed in the preceding claim in combination with claim 10 or 11, wherein the second pressure drop means (30) is welded in a groove defined by the wall (10) and a safety caisson defining with the recess, a second curved recess surrounding the door, over approximately 180°.

18. Installation according to any of claims 14 to 17, said installation being a fuel production installation.

## Patentansprüche

1. Transfereinrichtung zum Transfer zwischen zwei durch eine Wand (10) getrennten Kammern einer nuklearen Anlage, die vom Typ einer um eine Achse (X) beweglichen Trommeltür (8) ist, umfassend einen zykindrischert Körper (9), der einen Innenraum (12) begrenzt, in welchem ein Objekt angeordnet sein kann, wobei dieser Raum (12) durch eine Öffnung (14) zugänglich ist, die entweder auf der Seite einer ersten Kammer (2) angeordnet sein kann, oder auf der Seite einer zweiten Kammer (4), wobei die Transfereinrichtung wenigstens ein Abdichtmittel umfasst, umfassend einen Dichtungsträger (24) und eine mit diesem Dichtungsträger (24) verbundene Dichtung (26), wobei der Dichtungsträger (24) lösbar zwischen der Wand (10) und der Trommeltür (8) befestigt sein kann, wobei der Dichtungsträger (24) und die Dichtung (26) im Wesentlichen entlang der Wand (10) gemäß einer Erzeugenden eines Zylinders angeordnet sind, der den äußeren Umfang der Trommeltür (8) bildet, wobei die Dichtung (26) in Kontakt mit dem äußeren Umfang der Trommeltür ist, um an ihr zu reiben, um die Abdichtung zwischen der Wand (10) und dem äußeren Umfang der Trommeltür (8) zu gewährleisten.

2. Transfereinrichtung nach Anspruch 1, bei der der Dichtungsträger (24) eine T-Rille umfasst, die die Dichtung (26) aufnimmt.

3. Transfereinrichtung nach Anspruch 1 oder 2, bei der der Dichtungsträger (24) aus rostfreiem Stahl ist.

4. Transfereinrichtung nach einem der vorhergehenden Ansprüche, bei der die Dichtung aus einem Material gefertigt ist, das Flammen und heißen Gasen widersteht.

5. Transfereinrichtung nach dem vorhergehenden Anspruch, bei der die Dichtung aus einem Brandschutzmaterial gefertigt ist.

6. Transfereinrichtung nach einem der vorhergehenden Ansprüche, bei der das Abdichtmittel aus mehreren Teilen hergestellt ist, beispielsweise aus drei Teilen,

7. Transfereinrichtung nach einem der vorhergehenden Ansprüche, umfassend eine erste Druckverlusteinrichtung (28), die dazu ausgelegt ist, den Weg der Gase zwischen den Kammern (2, 4) zu vergrößern, wobei die erste Einrichtung (28) an einem oberen Ende der Tür (8) im Wesentlichen in einer Ebene montiert ist, die orthogonal zur Rotationsachse (X) der Tür (8) ist.

8. Transfereinrichtung nach dem vorhergehenden Anspruch, bei der die erste Druckverlusteinrichtung (28) durch ein Winkelstück aus Stahl gebildet ist.

9. Transfereinrichtung nach Anspruch 7 oder 8, bei der die erste Druckverlusteinrichtung (28) durch mehrere Kreisbogen gebildet ist, die Ende an Ende angeordnet sind.

10. Transfereinrichtung nach einem der vorhergehenden Ansprüche, umfassend eine zweite Druckverlusteinrichtung (30), die entlang einer Erzeugenden des äußeren Umfangs des Transfermechanismus angeordnet ist.

11. Transfereinrichtung nach dem vorhergehenden Anspruch, bei der die zweite Druckverlusteinrichtung (30) ein längliches Element aus Stahl mit einem im Wesentlichen kreisförmigen Querschnitt umfasst.

12. Transfereinrichtung nach einem der vorhergehenden Ansprüche, bei der die Tür eine erste Achse (40) umfasst, die von einer ersten Fläche (36) vorsteht, sowie eine zweite Achse (42), die von einer zweiten Fläche (38) vorsteht, um welche sich die Tür um sich selbst drehen kann.

13. Transfereinrichtung nach einem der vorhergehenden Ansprüche, bei der die Tür mittels wenigstens eines Elektromotors zur Rotation angetrieben wird.

14. Nukleare Anlage, umfassend eine Hauptkammer (2) und wenigstens eine Sekundärkammer (4), die durch eine Wand (10) getrennt sind, eine in der Wand (10) vorgesehene Öffnung (18) zur Kommunikation zwischen den Kammern (2, 4), sowie eine Transfereinrichtung gemäß einem der vorhergehenden Ansprüche zwischen den Kammern (2, 4).

15. Anlage nach dem vorhergehenden Anspruch, bei der der Dichtungsträger (24) durch eine Bolzenverbindung an der Wand befestigt ist, die die zwei Kammern (2, 4) trennt.

16. Anlage nach Anspruch 14 oder 15, umfassend eine erste gekrümmte Vertiefung (20) mit einem Innenradius, der im Wesentlichen gleich dem Außenradius der Tür (8) ist und einen Bereich dieser Tür (8) aufnimmt.

17. Anlage nach dem vorhergehenden Anspruch in Verbindung mit Anspruch 10 oder 11, bei der die zweite Druckverlusteinrichtung (30) in eine Kehle geschweißt ist, die von der Wand (10) und einem Schutzkasten begrenzt wird, der die Vertiefung begrenzt, wobei eine zweite gekrümmte Vertiefung die Tür auf ungefähr 180° umgibt.

18. Anlage nach einem der Ansprüche 14-17, wobei die Anlage eine Anlage zur Brennstoffhersteliung ist.
